# EUROPEAN PATENT APPLICATION

(11) **EP 4 818 234 A1**
(43) Date of publication of application: **07.10.2026**
(21) Application number: 25167996.5
(22) Date of filing: 02.04.2025
(51) Int. Cl.: C08J 5/04

(54) **COMPOSITE MATERIAL AND METHOD FOR ITS MANUFACTURE**

(71) Applicant: Sutu OÜ, 94129 Suure-Roosti (EE)
(72) Inventor: Õis-Saar, Ailet, 94129 Suure-Roosti (EE); Saar, Kaido, 94129 Suure-Roosti (EE)
(74) Representative: Moosedog Oy

(57) **Abstract**

The present disclosure relates to a method for manufacturing a composite material and the composite material. The method comprises milling *Phragmites australis* fibers to obtain particles having a size in the range from 150 µm to 250 µm, drying the milled *Phragmites australis* fibers at a temperature in a range from 40°C to 60°C for 8 to 12 hours, mixing the milled and dried *Phragmites australis* fibers with a polymer matrix to form a composite mixture, wherein the *Phragmites australis* fibers constitute 15% to 50% by weight of the composite mixture, compounding the composite mixture at a temperature in a range from 180°C to 205°C to form the composite material. The composite material has a thickness in a range from 150 µm to 250 µm.

## Description

### TECHNICAL FIELD

The present disclosure relates to the field of composite materials comprising *Phragmites australis* fibers and methods for their manufacturing.

### BACKGROUND

The need for sustainable materials has driven increasing interest in biodegradable composites across multiple industries, including packaging, consumer goods, and construction. Conventional fossil-based plastics contribute significantly to environmental pollution and microplastic accumulation. In response, biopolymers such as polylactic acid (PLA) have gained attention. However, biopolymer composites, while environmentally preferable, are hindered by several persistent technical challenges. Pure biopolymers typically suffer from brittleness, exhibiting low impact resistance and a tendency to fracture under mechanical stress. Additionally, their production costs remain substantially higher than those of conventional petroleum-based plastics, limiting commercial viability. A further complication lies in processing complexity, particularly in achieving effective fiber-matrix bonding, which is essential for ensuring uniformity and mechanical performance across composite products. Lastly, the rate at which these materials biodegrade is often inconsistent, making it difficult to balance structural integrity during use with the need for complete and timely degradation post-disposal.

Natural fibers have been introduced into polymer matrices to enhance mechanical properties and promote a more circular material lifecycle. Typically, fibers such as flax, hemp, kenaf, and jute are used for reinforcement. These approaches, while partially effective, often rely on crops that are purpose-grown, thus requiring additional agricultural inputs and harvesting cycles, which may compromise the overall sustainability profile. Moreover, regional limitations and the need for chemical treatment to ensure proper adhesion to the polymer matrix remain barriers to widespread adoption.

Simultaneously, there is a growing ecological issue related to the overgrowth of *Phragmites australis* (common reed), particularly along coastal wetlands and water bodies. This plant spreads rapidly, binds large quantities of organic carbon, and contributes to eutrophication if not actively harvested. For instance, the Baltic Sea region alone experiences widespread reed overgrowth along thousands of kilometers of coastline. Although cutting the reed is ecologically necessary, there is a lack of economically viable and scalable ways to reuse the biomass collected.

Efforts to incorporate *Phragmites australis* into industrial materials have been limited, often due to inconsistent particle size, poor compatibility with polymers, or challenges in processing. Meanwhile, traditional reinforcement methods using mineral fillers or synthetic fibers such as glass negate the goal of environmental sustainability, and existing biodegradable composites often lack the strength and predictability needed for practical use.

Thus, there is a comprehensive need for a solution that addresses both ecological and material performance challenges-specifically, by transforming excess *Phragmites australis* biomass into a mechanically robust, industrially processable, and environmentally responsible composite material.

Therefore, in light of the foregoing discussion, there is a need to overcome the aforementioned limitations to enhance composite material performance while providing a sustainable and practical reuse pathway for *Phragmites australis* biomass.

### SUMMARY

The aim of the present disclosure is to provide a method and a composite material to improve the mechanical properties, processing consistency, and ecological viability of biodegradable polymer composites while offering a practical reuse for *Phragmites australis* biomass. The aim of the disclosure is achieved by a method for manufacturing a composite material comprising the steps of milling *Phragmites australis* fibers to obtain particles of a defined size, drying the fibers, mixing them with a polymer matrix, and compounding the resulting mixture under controlled thermal conditions to form a sheet-like composite. Additionally, the aim is achieved by a composite material comprising a biodegradable polymer matrix and dried *Phragmites australis* fibers within a defined weight and particle size range, processed to a specific thickness and thermal profile as defined in the appended independent claims to which reference is made. Advantageous features are set out in the appended dependent claims.

The embodiments of the present disclosure substantially enable improving the structural toughness, impact resistance, and predictability of degradation of biodegradable materials, while simultaneously creating value from the necessary harvesting of invasive or overgrown *Phragmites australis.*

Additional aspects, advantages, features and objects of the present disclosure would be made apparent from the drawings and the detailed description of the illustrative embodiments constructed in conjunction with the appended claims that follow.

### DETAILED DESCRIPTION OF EMBODIMENTS

The following detailed description illustrates embodiments of the present disclosure and ways in which they can be implemented.

In a first aspect, an embodiment of the present disclosure provides a method for manufacturing a composite material, the method comprising:
- milling *Phragmites australis* fibers to obtain particles having a size in the range from 150 µm to 250 µm;
- drying the milled *Phragmites australis* fibers at a temperature in a range from 40°C to 60°C for 8 to 12 hours;
- mixing the milled and dried *Phragmites australis* fibers with a polymer matrix to form a composite mixture, wherein the *Phragmites australis* fibers constitute 15% to 50% by weight of the composite mixture; and
- compounding the composite mixture at a temperature in a range from 180°C to 205°C to form the composite material with a thickness in a range from 150 to 250 µm.

In a second aspect, an embodiment of the present disclosure provides a composite material comprising:
a polymer matrix (302);
dried Phragmites australis fibers (304), wherein the Phragmites australis fibers (304) constitute in the range from 15 % to 50 % by weight of the composite material (300), and wherein the Phragmites australis fibers (304) have a particle size in the range from 150 µm to 250 µm;
wherein the composite material (300) has a thickness in the range from 150 µm to 250 µm formed by compounding at a temperature in the range from 180 °C to 205 °C.

The term "*composite material"* as used herein refers to a material composed of at least two distinct components, namely a polymer matrix and reinforcing fibers such as *Phragmites australis* fibers, where the fibers are dispersed within the matrix to enhance mechanical properties. The term "*Phragmites australis fibers"* as used herein refers to mechanically processed particles derived from the stalks of the common reed plant. The method for manufacturing the composite materials begins with the reduction of *Phragmites australis* fibers into particulate fibers within a defined size range of 150 µm to 250 µm through milling. Optionally, the particle size lies in a range of 150 µm, 160 µm, 170 µm, 180 µm, 190 µm, 200 µm, 210 µm, 220 µm, 230 µm, or 240 µm up to 160 µm, 170 µm, 180 µm, 190 µm, 200 µm, 210 µm, 220 µm, 230 µm, 240 µm, or 250 µm. Once milled, the fibers are subjected to drying at temperatures ranging from 40°C to 60°C for a duration of 8 hours to 12 hours, which ensures removal of residual moisture that could otherwise interfere with dispersion and bonding. Optionally, the drying temperature lies in the range of 40°C, 45°C, 50°C, or 55°C up to 45°C, 50°C, 55°C, or 60°C. Optionally, the drying duration lies in a range of 8 h, 8.5 h, 9 h, 9.5 h, 10 h, 10.5 h, 11 h, or 11.5 h up to 8.5 h, 9 h, 9.5 h, 10 h, 10.5 h, 11 h, 11.5 h, or 12 h. These dried fibers are then introduced into a polymer matrix and blended to create a composite mixture. The proportion of *Phragmites australis* fibers in the composite mixture is controlled to be between 15% and 50% by weight, facilitating reinforcement without compromising processability. Optionally, the fiber content lies in a range of 15%, 20%, 25%, 30%, 35%, 40%, or 45% or by weight up to 20%, 25%, 30%, 35%, 40%, 45%, or 50%.

Subsequently, the composite mixture is then compounded. The term "*compounding*" as used herein refers to the process of thermomechanically blending the polymer matrix and *Phragmites australis* fibers into a homogeneous mixture using thermal and mechanical energy, typically within a defined temperature. Compounding is at a temperature range of 180°C to 205°C. The term *"compounding temperature"* as used herein refers to the temperature range applied during mixing that is sufficient to soften the polymer matrix, allows dispersion of *Phragmites australis* fibers, and achieves homogeneity without causing thermal degradation. Optionally, the compounding is at the temperature lying in a range of 180°C, 185°C, 190°C, 195°C, or 200°C up to 185°C, 190°C, 195°C, 200°C, or 205°C. This temperature range is critical to achieving a homogeneous dispersion of the *Phragmites australis* fibers within the polymer matrix, thereby enabling a consistent and mechanically stable composite material. The term *"homogeneous dispersion"* as used herein refers to the uniform distribution of *Phragmites australis* fibers throughout the polymer matrix such that there is minimal aggregation, settling, or concentration gradients. The compounding results in a composite material with a thickness between 150 µm and 250 µm. Optionally, the resulting composite material has a thickness lying in a range of 150 µm, 160 µm, 170 µm, 180 µm, 190 µm, 200 µm, 210 µm, 220 µm, 230 µm, or 240 µm up to 160 µm, 170 µm, 180 µm, 190 µm, 200 µm, 210 µm, 220 µm, 230 µm, 240 µm, or 250 µm.

The described method for manufacturing the composite material improves a material's structural integrity while maintaining its environmental compatibility. The technical effect of the abovementioned method is that the formed composite material exhibits enhanced tensile strength, with increases in the range of 30% to 50% over comparable unreinforced polymers. Impact resistance is similarly improved by approximately 20% to 40%. Furthermore, the specified thickness of 150 µm to 250 µm is optimized to ensure complete biodegradation of the composite under industrial composting conditions. This prevents long-term environmental contamination by eliminating the formation of persistent microplastic residues. The term *"industrial composting conditions"* as used herein refers to controlled aerobic environments maintained at elevated temperatures (typically 55°C to 70°C), high humidity, and regulated oxygen levels, in which biodegradable materials fully decompose within a defined timeframe. The method thus enables a balance between performance during use and full degradation at the product's end of life, while also valorizing an otherwise problematic biomass source.

Optionally, the polymer matrix is selected from a group comprising at least one of: PLA, cellulose derivatives, bio-polyesters. Polylactic acid (PLA), cellulose derivatives such as cellulose acetate or carboxymethyl cellulose, and bio-polyesters such as polyhydroxyalkanoates (PHA), polybutylene succinate (PBS), or polyglycolic acid (PGA) are biodegradable and compatible with method for manufacturing the composite material in the first aspect. These materials are known for their compostability and structural versatility. The term *"biodegradable polymer matrix"* as used herein refers to a polymer or blend of polymers that are capable of undergoing decomposition into natural elements such as carbon dioxide, water, and biomass through biological processes under industrial composting conditions.

Each matrix type offers specific advantages. PLA, for example, is widely available, cost-efficient, and exhibits a suitable melting point in the range of 150°C to 180°C, making it compatible with the fiber compounding temperature of 180°C to 205°C. Cellulose derivatives can increase flexibility and moisture resistance, while bio-polyesters offer improved toughness and elongation at break. The compatibility of these polymer matrices with *Phragmites australis* fibers supports uniform fiber dispersion and mechanical reinforcement during processing.

By incorporating PLA, cellulose derivatives or bio-polyesters which are biodegradable matrices, the resulting composite not only maintains full industrial compostability but also benefits from improved interfacial bonding, enabling reliable mechanical performance during use. The selection of the polymer matrix may be based on the target application - for example, PLA for packaging, cellulose derivatives for moisture-exposed goods, and bio-polyesters for molded parts with impact or flexibility requirements.

Optionally, the compounding is performed using at least one of the following methods: extrusion, injection molding, compression molding. These compounding methods are compatible with the composite mixture comprising *Phragmites australis* fibers and allow the formation of the composite material in various formats such as sheets, films, molded parts, or profiles.

Extrusion is particularly suited for continuous processing of composite sheets or films. It enables precise control over thickness and fiber distribution by adjusting the nozzle geometry, temperature zones, and screw profile. Preferably, when using the extrusion, the *Phragmites australis* fibers constitute 15% to 25% by weight of the composite mixture. Injection molding allows the material to be formed into complex three-dimensional shapes, useful for consumer products, containers, or automotive components. Compression molding is suitable for forming uniform, flat panels and is often used when dimensional stability and pressure consolidation are required.

The technical effect of using these compounding methods is that they facilitate scalability and adaptation of the composite material to different industrial requirements. Each technique ensures sufficient thermal input and shear mixing to maintain homogeneous fiber dispersion, as required by the processing temperature range of 180°C to 205°C. These methods are already widely adopted in biopolymer processing lines, enabling smooth integration of the disclosed composite into existing manufacturing infrastructures.

Optionally, the compounding is performed using a twin-screw extruder at a mass throughput speed in the range from 1,5 kg/h to 3 kg/h. Further, optionally, the compounding may optionally be carried out using a twin-screw extruder operating at the mass throughput speed lying in a range of 1.5 kg/h, 1.6 kg/h, 1.7 kg/h, 1.8 kg/h, 1.9 kg/h, 2.0 kg/h, 2.1 kg/h, 2.2 kg/h, 2.3 kg/h, 2.4 kg/h, 2.5 kg/h, 2.6 kg/h, 2.7 kg/h, 2.8 kg/h, or 2.9 kg/h up to 1.6 kg/h, 1.7 kg/h, 1.8 kg/h, 1.9 kg/h, 2.0 kg/h, 2.1 kg/h, 2.2 kg/h, 2.3 kg/h, 2.4 kg/h, 2.5 kg/h, 2.6 kg/h, 2.7 kg/h, 2.8 kg/h, 2.9 kg/h, or 3.0 kg/h. The term *"twin-screw extruder"* as used herein refers to a polymer processing device consisting of two intermeshing screws rotating within a barrel, used to convey, melt, and mix materials under controlled thermal and shear conditions. The twin-screw extrusion is beneficial for compounding because of its superior mixing efficiency. It provides both distributive and dispersive mixing, which ensures that the *Phragmites australis* fibers are uniformly distributed throughout the polymer matrix. The counter-rotating or co-rotating screw configuration, combined with the selected speed range, allows for effective energy input and residence time control, without causing thermal degradation of either the polymer or the fibers.

The technical effect of using the twin-screw extrusion is an enhanced homogeneity of the composite material and prevention of agglomeration of *Phragmites australis* fibers. Moreover, the precise control of the mass throughput speed contributes to consistent product thickness and mechanical performance. By maintaining mass throughput speed within the specified range, thermal and mechanical stresses remain balanced, thereby optimizing *Phragmites australis* fiber and polymer matrix bonding and the quality of the composite material.

Optionally, the mixing further comprises incorporating at least one of: a toughening agent, a coupling agent. These additives are introduced into the polymer matrix to improve mechanical properties and interfacial adhesion. These components are blended into the composite mixture alongside the milled and dried *Phragmites australis* fibers and the polymer matrix.

The term *"toughening agent"* as used herein refers to an additive introduced into the polymer matrix to enhance its impact resistance, elasticity, and energy absorption characteristics under mechanical stress.

A toughening agent may be used to improve the flexibility, elongation at break, and overall impact resistance of the final composite material. This is particularly relevant in overcoming the inherent brittleness of certain biopolymers, enhancing their suitability for applications that require mechanical durability under dynamic loading conditions.

The term *"coupling agent"* as used herein refers to a chemical additive that promotes interfacial bonding between the hydrophilic fibers and the hydrophobic polymer matrix, thereby improving stress transfer and mechanical strength. A coupling agent may be included to enhance the interfacial adhesion between the *Phragmites australis* fibers and the polymer matrix. *Phragmites australis* fibers typically exhibit hydrophilic surface chemistry, which may be poorly compatible with some polymer matrices. Coupling agents address this mismatch by promoting chemical or physical bonding at the fiber-matrix interface, thereby improving stress transfer efficiency and mechanical performance.

The technical effect is that the optional addition of these agents allows the formulation to be adjusted according to specific end-use requirements, providing flexibility in tuning the mechanical and processing characteristics of the composite material while maintaining the overall biodegradability of the product.

Optionally, the toughening agent is polybutylene adipate terephthalate (PBAT), and/or the coupling agent is a PLA-maleic anhydride-based coupling agent. The present disclosure optionally provides that the toughening agent incorporated in the composite mixture is polybutylene adipate terephthalate (PBAT), which is a biodegradable copolyester known for its high flexibility and elasticity. PBAT can increase the ductility of the composite material, reducing its tendency to fracture under impact or bending forces. When included, PBAT enhances the strain-at-break characteristics of the composite material, making it suitable for dynamic or load-bearing applications. In one embodiment, the toughening agent is polybutylene adipate terephthalate (PBAT), incorporated in the range of 8% to 12% by weight relative to the total weight of the composite mixture.

Additionally, or alternatively, the coupling agent may be selected as a PLA-maleic anhydride-based coupling agent. This type of coupling agent chemically interacts with both the hydroxyl groups present on the *Phragmites australis* fiber surfaces and the functional groups in the polymer matrix, forming molecular bridges that enhance interfacial compatibility. The resulting chemical bonding improves the stress transfer between polymer matrix and *Phragmites australis* fibers, thereby increasing tensile strength and reducing the likelihood of delamination or fiber pull-out. Further, optionally, the PLA-maleic anhydride-based coupling agent can be added up to 5% by weight. This ensures the biodegradability of the composite mixture.

The technical effect is that the inclusion of PBAT and PLA-maleic anhydride-based coupling agent as described ensures that the final composite material combines strength, flexibility, and improved processability, all while maintaining its biodegradable characteristics and compatibility with industrial composting systems without leaving persistent residues. Further, the presence of these additives increases the energy absorption capacity of the final composite under mechanical load, reduces the likelihood of microcrack initiation, and enhances fiber dispersion within the matrix.

Optionally, the polymer matrix is dried at a temperature in a range from 40°C to 60°C for 8 to 12 hours before the mixing. The present disclosure optionally provides that, prior to the mixing stage, the polymer matrix is subjected to a drying step. In this step, the polymer matrix is dried at a temperature lying in a range of 40°C, 45°C, 50°C, or 55°C up to 45°C, 50°C, 55°C, or 60°C, for a duration lying in a range 8 h, 8.5 h, 9 h, 9.5 h, 10 h, 10.5 h, 11 h, or 11.5 h up to 8.5 h, 9 h, 9.5 h, 10 h, 10.5 h, 11 h, 11.5 h, or 12 h.

Drying the polymer matrix prior to mixing is beneficial for moisture-sensitive biodegradable polymers, particularly those that undergo hydrolytic degradation or loss of mechanical integrity in the presence of residual water. Moisture can cause void formation, uneven *Phragmites australis* fiber distribution, or inconsistent flow behavior during compounding. It can also reduce the efficiency of compatibilizers or coupling agents by interfering with chemical bonding mechanisms.

The technical effect of the inclusion of this drying step ensures that the composite mixture remains homogeneous, with uniform dispersion of the *Phragmites australis* fibers and additives, and avoids microstructural defects in the composite material that could impair strength or durability. The result is a more reliable, and mechanically stable composite material with consistent quality across production batches is obtained.

Optionally, the milling is performed using a classifier using a mill speed in a range from 16000 rpm to 24000 rpm and a classified speed of in a range from 2500 rpm to 8000 rpm. Further, optionally, the mill speed is in the range from 16000 rpm, 18000 rpm, 20000 rpm or 22000 rpm up to 18000 rpm, 20000 rpm, 22000 rpm or 24000 rpm and the classified speed is optionally in the range from 2500 rpm, 3500 rpm, 4500 rpm. 5500 rpm, 6500 rpm or 7500 rpm up to 3000 rpm, 4000 rpm, 5000 rpm, 6000 rpm, 7000 rpm or 8000 rpm. This configuration enables precise control of the particle size distribution within the targeted range of 150 µm to 250 µm. The use of a classifier during the milling process serves to selectively collect particles within the desired size band while recirculating oversized fragments for further reduction. This ensures uniformity of the final *Phragmites australis* fiber fraction and minimizes the presence of fines or large particles that could disrupt mixing or reduce composite consistency. Further optionally, the mill can be one of the following: a hammer mill, a turbo mill, pin mill. All of these mills allow to operate at the required speeds.

The mill operating at the specified speed delivers sufficient mechanical energy to fracture the *Phragmites australis* fibers without excessive thermal degradation. The resulting *Phragmites australis* fibers are suitable for uniform dispersion within the polymer matrix, and their controlled size contributes to optimal interfacial bonding, enhanced mechanical strength, and smooth compounding behavior.

This optional method of *Phragmites australis* fiber preparation ensures repeatable and efficient processing, which is essential for scaling production and maintaining quality standards across composite product lines.

Optionally, the method for manufacturing the composite material further comprises cooling the composite material after compounding. This cooling is applied to the composite material immediately after it is shaped or extruded to stabilize the composite material and lock in the mechanical and structural properties achieved during processing. Cooling may be achieved through air cooling, water bath quenching, or contact with a temperature-controlled surface, depending on the processing method used. The rate and uniformity of cooling are important factors in determining the internal stresses, dimensional stability, and crystallinity of the final composite.

By incorporating a dedicated cooling step, the composite material can be brought to ambient or near-ambient temperatures in a predictable manner. This reduces warping, shrinkage, or post-extrusion deformation, especially in thin sheet or film formats. Moreover, the rapid solidification helps maintain the uniform dispersion of *Phragmites australis* fibers achieved during compounding, ensuring consistency of mechanical performance across the surface and throughout the thickness of the material. The optional cooling step therefore supports quality control, dimensional accuracy, and enhanced durability of the final composite material.

The present disclosure also relates to the method for manufacturing the composite material as described above. Various embodiments and variants disclosed above, with respect to the aforementioned method manufacturing the composite material, apply *mutatis mutandis* to the composite material.

In a second aspect, the present disclosure provides a composite material comprising a polymer matrix and dried *Phragmites australis* fibers. The fibers are incorporated within the matrix in an amount lying in a range of 15%, 20%, 25%, 30%, 35%, 40%, or 45% or by weight up to 20%, 25%, 30%, 35%, 40%, 45%, or 50% by weight. The fibers have a particle size lying in a range of 150 µm, 160 µm, 170 µm, 180 µm, 190 µm, 200 µm, 210 µm, 220 µm, 230 µm, or 240 µm up to 160 µm, 170 µm, 180 µm, 190 µm, 200 µm, 210 µm, 220 µm, 230 µm, 240 µm, or 250 µm. The composite material is formed by compounding the *Phragmites australis* fiber and the polymer mixture at a temperature lying in a range of 180°C, 185°C, 190°C, 195°C, or 200°C up to 185°C, 190°C, 195°C, 200°C, or 205°C, resulting in a final thickness lying in a range of 150 µm, 160 µm, 170 µm, 180 µm, 190 µm, 200 µm, 210 µm, 220 µm, 230 µm, or 240 µm up to 160 µm, 170 µm, 180 µm, 190 µm, 200 µm, 210 µm, 220 µm, 230 µm, 240 µm, or 250 µm. Optionally, herein the term "dried *Phragmites australis* fibers" refers to *Phragmites australis* fibers which have a moisture content up to 3%. Preferably, the moisture content is up to 2%. This helps to prevent hydrolysis of the polymer matrix, which degrades its molecular weight, poor interfacial adhesion between the polymer matrix and the dried *Phragmites australis* fibers, and finally processing defects like bubbles or poor flow during compounding.

The composite material exhibits high uniformity in fiber dispersion and a strong interface between the fibers and matrix. The dried *Phragmites australis* fibers provide internal reinforcement, forming a structural framework within the biodegradable polymer. The defined temperature range ensures homogeneous mixing without thermal degradation of either the polymer or the natural fibers. The thickness specification of 150 µm to 250 µm is critical for achieving full biodegradability under industrial composting conditions.

The benefits of the composite material are notable. Compared to unreinforced biodegradable polymers, the composite material demonstrates an increase in tensile strength of approximately 30% to 50%, and an improvement in impact resistance of about 20% to 40%. At the same time, it supports predictable and complete biodegradation into CO₂, water, and biomass, with no generation of persistent microplastics. The controlled processing conditions and composition of the composite material enable scalable production of high-performance, eco-friendly sheets, films, or molded parts for applications in packaging, construction, and consumer goods.

Optionally, the polymer matrix is selected from a group comprising at least one of: PLA, cellulose derivatives, or bio-polyesters. The selection of the polymer matrix from among PLA, cellulose derivatives, or bio-polyesters contributes significantly to the technical performance and end-of-life behavior of the composite material. These biodegradable polymers enable the composite material to fully disintegrate under industrial composting conditions, thereby preventing the accumulation of microplastics in the environment. In addition, these matrix types offer thermal and mechanical properties that align well with the compounding conditions generally used in the manufacturing process. This compatibility supports uniform *Phragmites australis* fiber distribution and maintains composite material homogeneity. The use of such polymers also contributes to reduced greenhouse gas emissions compared to fossil-based plastics, further enhancing the environmental profile of the composite. Altogether, the polymer matrix selection directly supports the goal of producing high-performance, ecologically responsible materials suitable for broad industrial use.

Optionally, the composite material further comprises at least one of: a toughening agent, a coupling agent. The optional inclusion of a toughening agent or a coupling agent in the composite material enhances both its mechanical reliability and interfacial compatibility. A toughening agent improves the ability of the material to absorb impact energy and resist crack propagation, which is particularly valuable in thin film or molded applications where mechanical loads or bending stresses may occur.

The coupling agent contributes to the stability of the composite material by promoting better adhesion between the hydrophilic *Phragmites australis* fibers and the generally hydrophobic polymer matrix. This improved interface reduces the risk of fiber pull-out, delamination, or internal voids, all of which can compromise mechanical integrity. As a result, the composite material demonstrates superior strength, durability, and structural consistency over time, without sacrificing its compostable nature. These enhancements ensure that the composite material performs reliably in practical use while maintaining its ecological benefits at the end of its life cycle.

Optionally, the toughening agent is polybutylene adipate terephthalate (PBAT), and/or the coupling agent is a PLA-maleic anhydride-based coupling agent. PBAT contributes significantly to the composite material impact performance and flexibility. As a biodegradable copolyester, PBAT enhances the strain tolerance of the composite material, reducing its tendency to fracture under mechanical loading while maintaining full compostability.

The PLA-maleic anhydride-based coupling agent acts as a compatibilizer between the *Phragmites australis* fibers and the polymer matrix. By chemically interacting with both phases, the coupling agent improves fiber-matrix adhesion, leading to more efficient load transfer, higher tensile strength, and reduced fiber pull-out under stress.

The synergistic use of the PBAT and the PLA-maleic anhydride-based coupling agent allows the composite material to retain mechanical durability during use while fully degrading under industrial composting conditions without leaving harmful residues. These enhancements further broaden the composite material's application scope in demanding yet sustainability-focused environments.

### EXAMPLE

### Example 1. Manufacturing composite material.

The following example illustrates an embodiment of the present disclosure, demonstrating one way in which the disclosed method can be implemented to manufacture the composite material described herein.

A batch of *Phragmites australis* reed is mechanically milled using a classifier hammer mill setup. The hammer mill is operated at 22000 revolutions per minute (rpm), and the classifier speed is set at 5500 rpm. This process yields a uniform fiber fraction with particle sizes below 250 µm. Partice size analysis shows partice sizes between 2.75 µm up to 211 µm.

The milled *Phragmites australis* fibers are dried at a temperature of 50°C overnight to remove residual moisture. The polymer matrix is also predried under the same thermal conditions.

The composite mixture is prepared by mixing the following: 67% by weight of a biodegradable polylactic acid (PLA), 20% by weight of milled and dried *Phragmites australis* fibers, 10% by weight of a biodegradable toughening agent (polybutylene adipate terephthalate) and 3% by weight of a coupling agent based on maleic anhydride-grafted polymer (SCONA TPPL 1112PA).

This mixture is compounded using a twin-screw compounder operated at a temperature range of 180°C to 205°C and a throughput rate 2.0 kg/h. After compounding, the material is processed into film form using an extrusion pilot line. The thickness of the resulting film is controlled to lie within the range of 150 µm to 250 µm. After stabilization, the final film thickness is approximately 250 µm.

Mechanical testing of the composite material reveals the following characteristics: tensile strength at maximum force (machine direction) 13.4 ± 0.9 megapascals (MPa) and 12 ± 0.4 megapascals (MPa) (transverse direction); tensile modulus 2150 ± 200 Mpa (machine direction) and 1640 ± 80 Mpa (transverse direction); strain at break 0.7 ± 0.2% (machine direction) and 0.8 ± 0.4% (transverse direction).

Impact resistance is increased by 30-40% and tensile strength is enhanced 30-50% relative to unreinforced PLA of the same thickness.

Biodegradation testing under industrial composting conditions confirms complete degradation of the composite material into CO₂, water, and biomass, with no formation of persistent microplastic particles.

This example demonstrates the practical implementation of the claimed method and material, confirming that the defined process parameters and material composition result in a mechanically improved, biodegradable composite suitable for scalable industrial production.

## Claims

1. A method for manufacturing a composite material, the method comprising:
- milling *Phragmites australis* fibers to obtain particles having a size in the range from 150 µm to 250 µm;
- drying the milled *Phragmites australis* fibers at a temperature in a range from 40°C to 60°C for 8 to 12 hours;
- mixing the milled and dried *Phragmites australis* fibers with a polymer matrix to form a composite mixture, wherein the *Phragmites australis* fibers constitute 15% to 50% by weight of the composite mixture; and
- compounding the composite mixture at a temperature in a range from 180°C to 205°C to form the composite material with a thickness in a range from 150 to 250 µm.

2. The method for manufacturing the composite material according to any of the preceding claims, wherein the polymer matrix is selected from a group comprising at least one of: PLA, cellulose derivatives, bio-polyesters.

3. The method for manufacturing a composite material according to any of the preceding claims, wherein the compounding is performed using at least one of the following methods: extrusion, injection molding, compression molding.

4. The method for manufacturing the composite material according to claims 1 and 2, wherein the compounding is performed using a twin-screw extruder at a mass throughput speed in the range from 1,5 kg/h to 3 kg/h.

5. The method for manufacturing the composite material according to any of the preceding claims, wherein the mixing further comprises incorporating at least one of: a toughening agent, a coupling agent.

6. The method for manufacturing the composite material according to claim 5, wherein the toughening agent is polybutylene adipate terephthalate (PBAT), and/or the coupling agent is a PLA-maleic anhydride-based coupling agent.

7. The method for manufacturing the composite material according to any of the preceding claims, wherein the polymer matrix is dried at a temperature in a range from 40°C to 60°C for 8 to 12 hours before the mixing.

8. The method for manufacturing the composite material according to any of the preceding claims, wherein the milling is performed using a classifier using a mill speed in a range from 16000 rpm to 24000 rpm and a classified speed in a range from 2500 rpm to 8000 rpm.

9. The method for manufacturing the composite material according to any of the preceding claims further comprising cooling the composite material after compounding.

10. A composite material comprising:
a polymer matrix (302);
dried *Phragmites australis* fibers (304), wherein the Phragmites australis fibers (304) constitute in the range from 15 % to 50 % by weight of the composite material (300), and wherein the Phragmites australis fibers (304) have a particle size in the range from 150 µm to 250 µm;
wherein the composite material (300) has a thickness in the range from 150 µm to 250 µm formed by compounding at a temperature in the range from 180 °C to 205 °C.

11. The composite material according to claim 10, wherein the polymer matrix is selected from a group comprising at least one of: PLA, cellulose derivatives, or bio-polyesters.

12. The composite material according to claims 10 and 11, wherein the composite material further comprises at least one of: a toughening agent, a coupling agent.

13. The composite material according to claim 12, wherein the toughening agent is polybutylene adipate terephthalate (PBAT), and/or the coupling agent is a PLA-maleic anhydride-based coupling agent.
